# NEUE EUROPÄISCHE PATENTSCHRIFT

(11) **EP 0 692 292 B2**
(45) Veröffentlichungstag und Bekanntmachung des Hinweises auf die Entscheidung über den Einspruch: **17.01.2001**
(45) Hinweis auf die Patenterteilung: 12.11.1997
(21) Anmeldenummer: 95109583.5
(22) Anmeldetag: 21.06.1995
(51) Int. Cl.: B01D 27/08, B01D 27/00, F01M 11/03

(54) **Flüssigkeitsfilter**
Filter for liquids
Filtre à liquides

(30) Priorität: 13.07.1994 DE 9411212 U
(43) Veröffentlichungstag der Anmeldung: 17.01.1996
(73) Patentinhaber: Ing. Walter Hengst GmbH & Co. KG, 48147 Münster (DE)
(72) Erfinder: Baumann, Dieter, D-48268 Greven-Gimbte (DE)
(74) Vertreter: Schulze Horn & Partner

(56) Entgegenhaltungen:
- DE-A- 3 432 855
- DE-A- 4 036 191
- DE-A- 4 140 140
- DE-A- 4 201 041
- DE-A- 4 240 656
- DE-B- 1 152 285
- US-A- 2 929 506

## Beschreibung

Die Erfindung betrifft ein Flüssigkeitsfilter, insbesondere für Öl oder Kraftstoff einer Brennkraftmaschine, wobei das Flüssigkeitsfilter ein Filtergehäuse mit mindestens je einem Flüssigkeitszulauf- und Flüssigkeitsrücklaufkanal, einen das Filtergehäuse flüssigkeitsdicht verschließenden, lösbaren Deckel und einen aus dem Filtergehäuse entnehmbaren, einzeln austauschbaren Filtereinsatz umfaßt und wobei das Flüssigkeitsfilter anstelle eines nur komplett austauschbaren Anschraub-Wechselfilters dichtend mit einem Filteranschlußflansch, z.B. einer Brennkraftmaschine, verschraubbar ist, und wobei zentral in der im montierten Zustand dem Filteranschlußflansch zugewandten Stirnwand des Filtergehäuses eine hohle, den axialen Flüssigkeitsrücklaufkanal bildende Befestigungsschraube angeordnet ist, die relativ zum Filtergehäuse verdrehbar ist.

Anschraub-Wechselfilter sind bekannt und verbreitet und werden seit vielen Jahren insbesondere an den Brennkraftmaschinen von Kraftfahrzeugen eingesetzt. Als nachteilig hat sich bei diesen Anschraub-Wechselfiltern herausgestellt, daß bei jedem Austausch der vollständige Wechselfilter entsorgt werden muß, was zu erheblichen Müllmengen und einer großen Materialverschwendung führt.

Zur Verminderung dieser Nachteile sind bereits unterschiedliche Flüssigkeitsfilter für eine Um- oder Nachrüstung als Ersatz für herkömmliche Anschraub-Wechselfilter vorgeschlagen worden, bei denen nur noch ein Filtereinsatz ausgetauscht wird und der übrige Teil des Flüssigkeitsfilters weiterverwendbar ist.

Ein Flüssigkeitsfilter mit den eingangs genannten Merkmalen ist aus der DE-AS 11 52 285 bekannt. Dieses Flüssigkeitsfilter kann zwar auch als Umrüstlösung zum Ersatz eines komplett auszuwechselnden Anschraub-Wechselfilters angesehen werden, jedoch befaßt sich diese Schrift nicht mit dem Problem, bei einem Filtereinsatzwechsel einen unkontrollierten und ungerichteten Flüssigkeitsaustritt zu vermeiden. Bei Stillstand einer zugehörigen Brennkraftmaschine und einer zugehörigen Ölpumpe schließt bei fehlendem Öldruck eine Ventilscheibe den Flüssigkeitsrücklaufkanal ab, so daß die im Filtergehäuse befindliche Flüssigkeit zurückgehalten wird. Bei einem Abschrauben des Deckels, z.B. zum Zweck des Filtereinsatzwechsels, ist also noch das gesamte Volumen des Filtergehäuses von Flüssigkeit erfüllt, die dann beim Losdrehen des Deckels auf dem gesamten Umfang des Schraubgewindes unkontrolliert und ungerichtet aus dem Gehäuse und aus dem Deckel austritt.

Die US 2 929 506 zeigt ein freistehendes Flüssigkeitsfilter, das über mehrere externe Leitungen mit einer zugehörigen Brennkraftmaschine verbunden ist. An der Unterseite des Filtergehäuses ist in dessen Boden eine mit einem Stopfen verschlossene Öffnung vorgesehen, die gemäß dieser Schrift dazu dient, von Zeit zu Zeit Schmutz aus dem Gehäuse abzuziehen. Der Filtereinsatzwechsel erfolgt über einen abnehmbaren Deckel, wobei in der Beschreibung des Filtereinsatzwechsels in dieser Schrift in keiner Weise erwähnt wird, daß es zweckmäßig sein könnte, vor Herausnahme des Filtereinsatzes die Flüssigkeit aus dem Filtergehäuse abzulassen. Außerdem ist hier die Schmutzabzugsöffnung mit dem Stopfen an der Unterseite des Filtergehäuses angeordnet; gerade diese Unterseite des Filtergehäuses wird aber bei dem patentgemäßen Flüssigkeitsfilter für dessen Verbindung mit dem Filteranschlußflansch benutzt und benötigt.

Schließlich ist aus der DE 42 40 656 Al ein Filter bekannt, das eine stirnseitige Grundplatte mit einem einstückig damit ausgeführten, nach innen in das Filtergehäuse weisenden Ansatz mit Innengewinde aufweist. Auch hier ist ein Deckel des Filtergehäuses zum Zweck eines Wechselns des Filtereinsatzes abschraubbar ausgeführt. Weiterhin ist bei diesem bekannten Filter im Mittelpunkt des Deckels eine Ablaßschraube vorgesehen, die dazu dient, vor einem Filtereinsatzwechsel das Filtergehäuse zu entleeren. Dieses Entleeren funktioniert nachteilig aber nur, wenn der Filter "hängend" eingebaut ist, d.h. mit im wesentlichen vertikaler Längsachse und nach unten weisendem Deckel. Bei waagerechter Einbaulage beispielsweise kann das Filtergehäuse durch eine derartige Ablaßschraube höchstens bis etwa zur Hälfte entleert werden. Schließlich ist noch als Nachteil anzusehen, daß bei diesem bekannten Filter, bei dem das Filtergehäuse insgesamt zum Verschrauben mit dem Filteranschlußflansch verdreht werden muß, der zwischen Filtergehäuse und Filteranschlußflansch angeordnete Dichtring erheblichen Beanspruchungen in Umfangsrichtung ausgesetzt wird. Auch bei sorgfältiger Montage und vorherigem Einölen oder Einfetten des Dichtringes kann es leicht dazu kommen, daß der Dichtring beim Anschrauben des Filtergehäuses verzerrt oder aus seiner vorgesehenen Lage verschoben wird, was ein relativ großes Risiko von Undichtigkeiten mit sich bringt, die entweder durch nicht korrekte Lage des Dichtringes oder durch dessen Beschädigung beim Anschraubvorgang entstehen.

Es stellt sich deshalb die Aufgabe, ein Flüssigkeitsfilter der eingangs genannten Art zu schaffen, das die vorangehend aufgeführten Nachteile vermeidet und bei dem eine in Umfangsrichtung betrachtet frei wählbare Positionierung einer Flüssigkeitsablaßöffnung im angeschraubten Zustand gewährleistet ist.

Die Lösung dieser Aufgabe gelingt erfindungsgemäß durch ein Flüssigkeitsfilter der eingangs genannten Art, welches dadurch gekennzeichnet ist, daß umfangsseitig im Filtergehäuse oder umfangsseitig im Deckel eine im Betrieb verschlossene, vor einem Filtereinsatzwechsel freigebbare Flüssigkeitsablaßöffnung zur Entleerung des Filtergehäuses vorgesehen ist.

Das erfindungsgemäße Flüssigkeitsfilter bietet den ersten Vorteil, daß es ein herkömmliches Anschraub-Wechselfilter ersetzen kann, wobei an dem Filteranschlußflansch, der z.B. an einer Brennkraftmaschine vorhanden ist, keine Änderungen durchgeführt werden müssen. Das Flüssigkeitsfilter ermöglicht also eine problemlose Umrüstung auf ein Filter, bei dem nur noch ein Filtereinsatz gewechselt werden muß und nicht mehr das komplette Flüssigkeitsfilter. Weiterhin bietet das erfindungsgemäße Flüssigkeitsfilter den Vorteil, daß das Filtergehäuse vor einem Filtereinsatzwechsel entleert werden kann, so daß bei Herausnahme des Filtereinsatzes aus dem Filtergehäuse das Filtergehäuse praktisch keine Flüssigkeit mehr enthält und auch der Filtereinsatz nur noch geringe Flüssigkeitsmengen mit sich führt. Durch die Gestaltung der Verbindung von Stirnwand des Flüssigkeitsfilters und Filteranschlußflansch kann das Filtergehäuse in seiner Umfangsrichtung bei der Montage am Filteranschlußflansch verdreht und in einer gewünschten Position durch Anziehen der Befestigungsschraube fixiert werden. Dabei wird die gewünschte Position des Gehäuses durch die Lage der Flüssigkeitsablaßöffnung festgelegt, die zweckmäßig den tiefsten Punkt des Filtergehäuses nach dessen Montage bilden soll. Auf diese Weise kann vor einem Filtereinsatzwechsel zunächst durch die Flüssigkeitsablaßöffnung die Flüssigkeit kontrolliert und gezielt aus dem Filtergehäuse abgelassen werden und ohne Umweltgefahren und ohne Verschmutzung benachbarter Teile, z.B. einer Brennkraftmaschine, aufgefangen und entsorgt werden.

Zur Vereinfachung der Anbringung des Flüssigkeitsfilters am Filteranschlußflansch ist bevorzugt vorgesehen, daß die Befestigungsschraube unverlierbar in der Stirnwand des Filtergehäuses gehaltert ist. Hierdurch kann beim Einbau des Flüssigkeitsfilters die Anbringung des Filtergehäuses ohne Schwierigkeiten erfolgen, da es genügt, außen das Filtergehäuse zu halten und dann die in der Stirnwand des Filtergehäuses gehalterte Befestigungsschraube zu verdrehen.

Um gängige Schraubwerkzeuge für die Anbringung des Flüssigkeitsfilters benutzen zu können, ist bevorzugt vorgesehen, daß die Befestigungsschraube an ihrem zum Deckel weisenden Ende einen Innen- und/oder Außenmehrkant als Schraubwerkzeugansatz aufweist. Die Benutzung von Spezialwerkzeugen, wie z.B. Bandschlüsseln oder Schraubenschlüsseln in extremen Größen, wird dadurch vermieden.

Weiterhin ist bevorzugt vorgesehen, daß radial außen in der dem Filteranschlußflansch zugewandten Fläche der Stirnwand des Filtergehäuses eine Ringnut zur Aufnahme eines Dichtringes vorgesehen ist, wobei in entspanntem Zustand des Dichtringes dieser in Axialrichtung des Filtergehäuses aus der Nut vorsteht und wobei in montiertem Zustand des Flüssigkeitsfilters der Dichtring unter elastischer Verformung vollständig innerhalb der Ringnut liegt. Hiermit wird erreicht, daß die einander zugewandten Flächen von Filteranschlußflansch und Stirnwand des Filtergehäuses im fest verschraubten Zustand der Befestigungsschraube unmittelbar aufeinanderliegen, so daß eine hohe Sicherheit gegen ein ungewolltes Losdrehen des Filtergehäuses bzw. der Befestigungsschraube erreicht wird. Zugleich wird der Dichtring mechanisch entlastet, so daß dieser eine höhere Lebensdauer erreicht, ohne daß die Sicherheit seiner Dichtwirkung beeinträchtigt wird.

Bevorzugt ist die Flüssigkeitsablaßöffnung durch eine mittels einer lösbaren Schraube verschlossene Durchbrechung oder Gewindebohrung gebildet, wodurch eine einfache Herstellung des Filters und eine einfache Bedienung gewährleistet werden.

Um ein Leerlaufen des Filters bei Nichtbetrieb, z.B. bei Stillstand einer zugehörigen Brennkraftmaschine, zu verhindern und um zu vermeiden, daß bei geöffnetem Filtergehäuse gefilterte Flüssigkeit z.B. Öl aus einer Brennkraftmaschine, nach außen austritt, wird vorgeschlagen, daß in dem axialen Flüssigkeitsrücklaufkanal in der Befestigungsschraube, d.h. auf der Reinseite, ein Rücklaufsperrventil angeordnet ist.

Zur Erzielung des gleichen doppelten Zwecks, hier aber auf der Rohseite, ist an der Stirnwand des Filtergehäuses filtergehäuseseitig eine den Zulaufkanal überdeckende Rücklaufsperrmembran vorgesehen, die zwischen Zulaufkanal und Filtereinsatz im Strömungsweg der zu filternden Flüssigkeit liegt.

Bevorzugt ist die Rücklaufsperrmembran flexibel und kreisringförmig ausgebildet und an ihrem radial inneren Rand zwischen der Stirnwand und einem an der Befestigungsschraube vorgesehenen Bund gehaltert. Hierdurch wird eine einfache Herstellung der Rücklaufsperrmembran und eine mit geringem Aufwand ausführbare Halterung der Rücklaufsperrmembran erreicht.

Eine weitere Ausgestaltung des Flüssigkeitsfilters sieht vor, daß die Befestigungsschraube zumindest über einen Teil der axialen Länge des Filtergehäuses in dieses hineinragt und auf ihrem Außenumfang Stützglieder für eine Faltenabstützung am Innenumfang eines im Filtergehäuse als Filtereinsatz angeordneten hohlzylindrischen, zickzack-förmig gefalteten Sternfiltereinsatzes aufweist. Hierdurch wird erreicht, daß der Filtereinsatz auch bei hohen Druckdifferenzen zwischen der Rohseite und der Reinseite nicht kollabiert. Dabei ist zweckmäßig die Befestigungsschraube mit einer relativ großen axialen Länge ausgeführt, so daß der Zugang zu dem an ihrem freien Ende vorgesehenen Schraubwerkzeugansatz erleichtert ist.

Um auch den Bereich des Innenumfanges des Filtereinsatzes abstützen zu können, der nicht im Bereich der Befestigungsschraube liegt, wird vorgeschlagen, daß der Deckel mit einem mit der Befestigungsschraube fluchtenden Stützkörper für eine Faltenabstützung am Innenumfang eines im Filtergehäuse als Filtereinsatz angeordneten hohlzylindrischen, zickzack-förmig gefalteten Sternfiltereinsatzes verbunden oder einstückig ausgeführt ist.

Eine Weiterbildung der zuletzt erläuterten Ausführung des Flüssigkeitsfilters schlägt vor, daß in dem Stützkörper ein Bypass-Ventil vorgesehen ist, durch welches bei Überschreiten einer vorgebbaren Druckdifferenz zwischen Rohseite und Reinseite des Flüssigkeitsfilters ein unmittelbarer Strömungsweg von der Rohseite zur Reinseite unter Umgehung des Filtereinsatzes freigebbar ist. Auf diese Weise wird sichergestellt, daß zumindest noch ein Flüssigkeitsdurchtritt durch das Filter möglich ist, wenn der Filtereinsatz undurchlässig geworden ist, um beispielsweise die Kraftstoff- oder Schmierölversorgung einer Brennkraftmaschine weiter zu ermöglichen.

Um im zuletzt beschriebenen Betriebsfall zumindest eine gewisse Filterung der durch den Filter strömenden Flüssigkeit zu gewährleisten, wird vorgeschlagen, daß im Verlauf des unmittelbaren Strömungsweges von der Rohseite zur Reinseite des Filters ein Bypass-Filterelement angeordnet ist. Hierdurch werden zumindest grobe Verunreinigungen der durch das Filter strömenden Flüssigkeit noch abgefangen, wodurch unter Umständen größere Schäden an einer zugehörigen Brennkraftmaschine vermieden werden können.

Zur Erleichterung des Auswechselns des Filtereinsatzes wird vorgeschlagen, daß der Deckel und der Filtereinsatz mit miteinander in Eingriff bringbaren Rastverbindungsmitteln ausgestattet sind, derart, daß bei einem Abnehmen des Deckels vom Filtergehäuse der Filtereinsatz vom Deckel aus dem Gehäuse heraus mitgenommen wird. Nach dem Herausnehmen des Filtereinsatzes aus dem Filtergehäuse mittels Lösen des Deckels kann dann problemlos die Rastverbindung zwischen Filtereinsatz und Deckel gelöst werden und es kann dann ein frischer Filtereinsatz mit dem Deckel verrastet und anschließend in umgekehrter Weise wieder in das Filtergehäuse eingebaut werden, indem der Deckel mit dem Filtergehäuse wieder verbunden wird, beispielsweise verschraubt wird.

Weiterhin ist bevorzugt vorgesehen, daß auch der Stützkörper mit dem Deckel klemmend oder rastend verbunden ist und daß auch das in dem Stützkörper gegebenenfalls vorgesehene Bypass-Ventil als mit dem Stützkörper verbindbare, bevorzugt verrastbare Baueinheit ausgeführt ist. Zusätzlich kann auch das gegebenenfalls vorgesehene Bypass-Filterelement schon an dem Deckel gehaltert sein, so daß eine große Baueinheit, bestehend aus Deckel, Stützkörper, Bypass-Ventil, Bypass-Filterelement und Filtereinsatz gebildet werden kann. Dies vereinfacht die Montage und Wartung des erfindungsgemäßen Flüssigkeitsfilters erheblich.

Das Filtergehäuse ist bevorzugt ein Leichtmetall-Druckgußteil, z.B. aus einer Aluminium- oder Magnesiumlegierung. Der zum Verschließen des Filtergehäuses dienende Deckel kann wahlweise ein Kunststoff-Spritzgußteil oder ebenfalls ein Leichtmetall-Druckgußteil sein. Die Befestigungsschraube ist aufgrund der von dieser aufzunehmenden mechanischen Belastungen vorzugsweise ein Stahlteil, das spanabhebend bearbeitet ist. Die verschiedenen Dichtringe sowie die Rücklaufsperrmembran sind, wie üblich, bevorzugt Elastomerteile. Der Stützkörper und das mit diesem gegebenenfalls integriert ausgebildete Bypass-Ventil sind bevorzugt ebenfalls Kunststoff-Spritzgußteile. Dies gilt auch für das in der Befestigungsschraube gegebenenfalls vorgesehene Rücklaufsperrventil. Der Filtereinsatz besteht vorteilhaft, wie schon zuvor erwähnt, aus Materialien, die eine vollständige thermische Verwertung nach Gebrauch erlauben, z.B. aus Filterpapier für den Filterkörper und Kunststoff, z.B. Polyamid, für die Stirnscheiben und Filz oder Gummi für die Dichtungen an den Stirnscheiben.

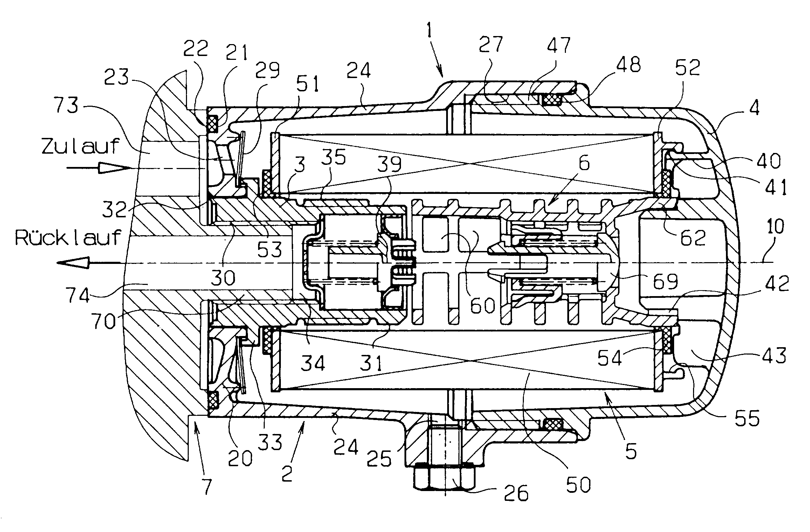

Ein Ausführungsbeispiel der Erfindung wird im folgenden anhand einer Zeichnung erläutert. Die einzige Figur der Zeichnung zeigt einen Flüssigkeitsfilter im Längsschnitt in einer horizontalen Einbaulage.

Die Zeichnungsfigur zeigt als Ausführungsbeispiel eines Flüssigkeitsfilters 1 eine Ausführung für einen waagerechten oder liegenden Einbau, d.h. mit einer im wesentlichen horizontal verlaufenden Längsachse 10. Das Flüssigkeitsfilter 1 besitzt ein im wesentlichen becherförmiges Filtergehäuse 2, das durch eine Stirnwand 20 und eine Umfangswand 24, vorzugsweise als Leichtmetall-Druckgußteil, gebildet ist. An ihrer nach außen, d.h. in der Zeichnung nach links weisenden Seite trägt die Stirnwand 20 eine Ringnut 21, in welcher ein Dichtring 22 aus einem Elastomer angeordnet ist. In Radialrichtung nach innen folgt ein Zulaufkanal 23, wobei üblicherweise mehrere derartige Zulaufkanäle 23 über den Umfang der Stirnwand 20 verteilt vorgesehen sind. Im Zentrum der Stirnwand 20 ist eine zentrale Befestigungsschraube 3 verdrehbar angeordnet, die mit einem Innengewinde 30 ausgebildet ist. Mittels eines Bundes 33 ist die Befestigungsschraube 3 innen an der Stirnwand 20 abgestützt.

Im linken Teil der Figur ist ein Filteranschlußflansch 7 erkennbar, der beispielsweise Teil des Motorblocks einer Brenkraftmaschine ist. Im oberen Teil des Filteranschlußflansches 7 liegt ein Zulaufkanal 73, durch welchen zu filternde Flüssigkeit zum Zulaufkanal 23 innerhalb der Stirnwand 20 des Flüssigkeitsfilters 1 gelangt. Unterhalb des Zulaufkanals 73 ist ein Rücklaufkanal 74 erkennbar, der durch einen aus der Fläche des Filteranschlußflansches 7 vorragenden Gewindestutzen 70 mit einem Außengewinde verläuft. Auf den Gewindestutzen 70 ist die Befestigungsschraube 3 aufgeschraubt, wodurch das Filtergehäuse 2 mit seiner Stirnwand 20 und dem Dichtring 22 an den Filteranschlußflansch 7 dichtend angepreßt wird.

Um die Befestigungsschraube 3 unverlierbar in der Stirnwand 20 des Filtergehäuses 2 zu haltern, ohne ihre Verdrehbarkeit zu behindern, ist die Befestigungsschraube 3 außenseitig mit einem Bördelrand 32 versehen, der ein Zurückziehen der Befestigungsschraube 3 in das Innere des Filtergehäuses 2, d.h. in der Zeichnung nach rechts, ausschließt.

An seiner nach rechts weisenden Seite ist das Filtergehäuse 2 offen ausgebildet und besitzt an der Innenseite seiner Umfangswand 24 ein Innengewinde 27. In dieses Innengewinde 27 ist ein Deckel 4 mittels eines passenden Außengewindes 47 unter Zwischenlage eines weiteren Dichtringes 48 dichtend einschraubbar.

Im Inneren des Flüssigkeitsfilters 1 ist weiterhin ein Filtereinsatz 5 angeordnet, der aus einem zickzack-förmig gefalteten Filterstoffkörper 50 besteht, der oben und unten mit je einer Stirnscheibe 51, 52 flüssigkeitsdicht verbunden, beispielsweise verklebt oder verschweißt ist. Beide Stirnscheiben 51, 52 sind kreisringförmig ausgebildet und tragen an ihrer radial inneren Kante je eine Dichtung 53, 54. Die in der Zeichnung linke Stirnscheibe 51 ist unter Zwischenlage der zugehörigen Dichtung 53 dichtend auf den Außenumfang der Befestigungsschraube 3 aufgesteckt.

Die in der Zeichnung rechte Stirnscheibe 52 des Filtereinsatzes 5 ist mit zur freien Seite hin vorragenden Rastaufnahmen 55 versehen, die mit Rastnasen 41, welche an Rastzungen 40 des Deckels 4 angebracht sind, zusammenwirken. Hierdurch ist eine rastende Verbindung zwischen dem Filtereinsatz 5 und dem Deckel 4 herstellbar.

Weiterhin ist mit dem Deckel 4 verbunden ein zentraler Stützkörper 6, der eine im wesentlichen hohlzylindrische, gitterartige Struktur besitzt und zur Abstützung des Innenumfangs des Filterstoffkörpers 50 dient. Die Durchbrechungen 60 im Stüztkörper 6 ermöglichen einen praktisch unbehinderten Flüssigkeitsdurchtritt. Mit seinem deckelseitigen Ende 62 ist der Stützkörper 6 klemmend oder rastend an dem Deckel 4 angebracht, wozu dieser eine Stützkörperaufnahme 42 an seiner Innenseite aufweist. Auf dieses deckelseitige Ende 62 ist die rechte Stirnscheibe 52 des Filtereinsatzes 5 mit ihrer Dichtung 54 dichtend aufgesetzt.

Wie aus der Zeichnung ersichtlich ist, erstreckt sich der Stützkörper 6 vom Deckel aus gesehen über etwa zwei Drittel der Länge des Filtereinsatzes 5; den übrigen Teil des hohlen Inneren des Filtereinsatzes 5 nimmt hier die Befestigungsschraube 3 ein. Damit auch diese eine Stützfunktion für den Filterstoffkörper 50 ausüben kann, ist die Befestigungsschraube 3 in dem im Inneren des Filtereinsatzes 5 liegenden Teil mit Stützgliedern 35 ausgeführt, die hier die Form von in Längsrichtung der Befestigungsschraube 3 verlaufenden vorstehenden Rippen oder Stegen haben.

Weiterhin trägt die Befestigungsschraube 3 an ihrem freien, zum Stützkörper 6 weisenden Ende einen Außenmehrkant 31, z.B. einen Sechskant, der zum Ansetzen eines Schraubwerkzeuges dient.

Weiter weist das hier dargestellte Ausführungsbeispiel des Flüssigkeitsfilters 1 eine Rücklaufsperrmembran 29 auf, die an der inneren Seite der Stirnwand 20 angeordnet ist und den Zulaufkanal 23 überdeckt. Bei Zuförderung von zu filternder Flüssigkeit in Zulaufrichtung durch den Zulaufkanal 73 im Filteranschlußflansch 7 und weiter durch den Zulaufkanal 23 in der Stirnwand 20 wird die Rücklaufsperrmembran 29 geöffnet und erlaubt einen Flüssigkeitsdurchtritt. Eine Strömung in entgegengesetzter Strömungsrichtung wird durch die Rücklaufsperrmembran 29 verhindert.

Im rechten Teil der Befestigungsschraube 3 ist bei diesem Ausführungsbeispiel ein Rücklaufsperrventil 39 angeordnet, das als vorgefertigtes Bauteil in das hohle Innere der Befestigungsschraube 3 eingepreßt oder eingeklebt ist. Das Rücklaufsperrventil 39 liegt damit in dem durch die hohle Befestigungsschraube 3 gebildeten Rücklaufkanal 34 für die gefilterte Flüssigkeit.

Ein weiteres Ventil ist innerhalb des Stützkörpers 6 vorgesehen, wobei es sich hier um ein Bypass-Ventil 69 handelt, das eine unmittelbare Strömungsverbindung zwischen der Zulauf- oder Rohseite und der Rücklauf- oder Reinseite des Flüssigkeitsfilters 1 freigibt, wenn der Druckabfall über dem Filtereinsatz 5 einen Grenzwert überschreitet. Auch das Bypass-Ventil 69 ist als vorgefertigtes Bauteil vom freien Ende des Stützkörpers 6 her in diesen eingesetzt und dort verrastet.

Schließlich besitzt das dargestellte Ausführungsbeispiel des Flüssigkeitsfilters 1 in der Umfangswand 24 des Filtergehäuses 2 eine Ablaßöffnung 25, die im Normalfall durch eine Schraube 26 dicht verschlossen ist. Zur Entleerung des Flüssigkeitsfilters 1, insbesondere zum Zweck eines Wechselns des Filtereinsatzes 5, kann die Schraube 26 aus der Ablaßöffnung 25 herausgedreht werden, wonach dann im Flüssigkeitsfilter 1 befindliche Flüssigkeit durch die Ablaßöffnung 25 abfließen und beispielsweise in einem dafür vorgesehenen Behälter aufgefangen werden kann.

Wie an früherer Stelle schon erläutert, ist das Flüssigkeitsfilter 1 insbesondere dazu geeignet, nur komplett austauschbare Anschraub-Wechselfilter zu ersetzen. Bei der ersten Montage des Flüssigkeitsfilters 1 wird zunächst das Filtergehäuse 2 vor dem Filteranschlußflansch 7 positioniert und danach durch Verdrehen der Befestigungsschraube 3 gegen den Filteranschlußflansch 7 verspannt. Aufgrund der Verdrehbarkeit der Befestigungsschraube 3 relativ zum Filtergehäuse 2 wird bei der Montage nur die Befestigungsschraube 3 verdreht, während das Filtergehäuse 2 in Umfangsrichtung nicht bewegt werden muß. Hierdurch wird der Dichtring 22 an der Stirnwand 20 des Filtergehäuses 2 auch nicht in Umfangsrichtung beansprucht, wodurch sichergestellt wird, daß hier keine Undichtigkeiten infolge eines Verschiebens oder Verzerrens des Dichtringes 22 auftreten. Außerdem liegt eine metallische Fläche der Stirnwand 20 auf der üblicherweise ebenfalls metallischen Fläche des Filteranschlußflansches 7, so daß im verschraubten Zustand eine hohe Losdrehsicherheit gewährleistet ist. Gleichzeitig kann aufgrund der Verdrehbarkeit der Befestigungsschraube 3 relativ zum Filtergehäuse 2 die in der Figur dargestellte Ablaßöffnung 25 in der gewünschten Lage, insbesondere nach unten weisend, positioniert werden, unabhängig davon, wie das Gewinde im Gewindestutzen 70 des Filteranschlußflansches 7 verläuft.

Im Betrieb des Flüssigkeitsfilters 1 strömt die zu filternde Flüssigkeit von z.B. einer Brennkraftmaschine durch den Zulaufkanal 73 und weiter durch den Zulaufkanal 23 über die Rücklaufsperrmembran 29 in das Innere des Filtergehäuses 2. Dort gelangt die zu filternde Flüssigkeit zum Außenumfang des Filtereinsatzes 5 und durchströmt diesen unter Abscheidung von Verunreinigungen von außen nach innen. Im Inneren des Filtereinsatzes 5 durchströmt die nun gefilterte Flüssigkeit die Durchbrechungen 60 des Stützkörpers 6 und anschließend das Rücklaufsperrventil 39 in Öffnungsrichtung. Weiter strömt die gefiltert Flüssigkeit durch den durch das hohle Innere der Befestigungsschraube 3 gebildeten Rücklaufkanal 34 in den im Filteranschlußflansch 7 vorhandenen Rücklaufkanal 74.

Im Fall einer zu starken Verschmutzung und Verstopfung des Filtereinsatzes 5 kann die Flüssigkeit vom Außenumfang des Filtereinsatzes 5 an der Innenseite des Deckels 4 entlang und über das ab einen gewissen Druckdifferenzwert öffnende Bypass-Ventil 69 unmittelbar zum Rücklaufkanal 34 und weiter zum Rücklaufkanal 74 strömen.

Für einen Wechsel des Filtereinsatzes 5, wie er nach einer gewissen Betriebszeit erforderlich ist, muß bei dem Flüssigkeitsfilter 1 lediglich der Deckel 4 abgeschraubt werden, wobei vorzugsweise zuvor ein Ablassen der Flüssigkeit aus dem Flüssigkeitsfilter 1 durch die Ablaßöffnung 25 erfolgt. Mit dem Abschrauben des Deckels 4 werden zugleich der Filtereinsatz 5 und der Stützkörper 6 aus dem Filtergehäuse 2 herausbewegt. Nach Abnehmen des verbrauchten Filtereinsatzes 5 vom Deckel 4 und Aufsetzen eines frischen Filtereinsatzes 5 auf den Deckel 4 kann dann das Zusammensetzen des Flüssigkeitsfilters 1 in ebenso einfacher Art und Weise durch Wiederaufschrauben des Deckels 4 auf das Filtergehäuse 2 erfolgen. Der Filtereinsatz 5, der nun das einzige für eine Filterwartung noch auszutauschende Bauteil ist, besteht vorzugsweise aus Materialien, die eine problemlose vollständige thermische Verwertung erlauben.

## Patentansprüche

1. Flüssigkeitsfilter, insbesondere für Öl oder Kraftstoff einer Brennkraftmaschine, wobei das Flüssigkeitsfilter (1) ein Filtergehäuse (2) mit mindestens je einem Flüssigkeitszulauf- und Flüssigkeitsrücklaufkanal (23, 34), einen das Filtergehäuse (2) flüssigkeitsdicht verschließenden, lösbaren Deckel (4) und einen aus dem Filtergehäuse (2) entnehmbaren, einzeln austauschbaren Filtereinsatz (5) umfaßt, wobei das Flüssigkeitsfilter (1) anstelle eines nur komplett austauschbaren Anschraub-Wechselfilters dichtend mit einem Filteranschlußflansch (7), z.B. einer Brennkraftmaschine, verschraubbar ist, und wobei zentral in der im montierten Zustand dem Filteranschlußflansch (7) zugewandten Stirnwand (20) des Filtergehäuses (2) eine hohle, den axialen Flüssigkeitsrücklaufkanal (34) bildende Befestigungsschraube (3) angeordnet ist, die relativ zum Filtergehäuse (2) verdrehbar ist,
**dadurch gekennzeichnet,**
daß umfangsseitig im Filtergehäuse (2) oder umfangsseitig im Deckel (4) eine im Betrieb verschlossene, vor einem Filtereinsatzwechsel freigebbare Flüssigkeitsablaßöffnung (25) zur Entleerung des Filtergehäuses (2) vorgesehen ist.

2. Flüssigkeitsfilter nach Anspruch 1, dadurch gekennzeichnet, daß die Befestigungsschraube (3) unverlierbar in der Stirnwand (20) des Filtergehäuses (2) gehaltert ist.

3. Flüssigkeitsfilter nach Anspruch 1 oder 2, dadurch gekennzeichnet, daß die Befestigungsschraube (3) an ihrem zum Deckel (4) weisenden Ende einen Innenund/oder Außenmehrkant (31) als Schraubwerkzeugansatz aufweist.

4. Flüssigkeitsfilter nach einem der vorangehenden Ansprüche, dadurch gekennzeichnet, daß radial außen in der dem Filteranschlußflansch (7) zugewandten Fläche der Stirnwand (20) des Filtergehäuses (2) eine Ringnut (21) zur Aufnahme eines Dichtringes (22) vorgesehen ist, wobei in entspanntem Zustand des Dichtringes (22) dieser in Axialrichtung des Filtergehäuses (2) aus der Nut (21) vorsteht und wobei in montiertem Zustand des Flüssigkeitsfilters (1) der Dichtring (22) unter elastischer Verformung vollständig innerhalb der Ringnut (21) liegt.

5. Flüssigkeitsfilter nach einem der vorangehenden Ansprüche, dadurch gekennzeichnet, daß die Flüssigkeitsablaßöffnung (25) durch eine mittels einer lösbaren Schraube (26) verschlossene Durchbrechung oder Gewindebohrung gebildet ist.

6. Flüssigkeitsfilter nach einem der vorangehenden Ansprüche, dadurch gekennzeichnet, daß in dem axialen Flüssigkeitsrücklaufkanal (34) in der Befestigungsschraube (3) ein Rücklaufsperrventil (39) angeordnet ist.

7. Flüssigkeitsfilter nach einem der vorangehenden Ansprüche, dadurch gekennzeichnet, daß an der Stirnwand (20) des Filtergehäuses (2) filtergehäuseseitig eine den Zulaufkanal (23) überdeckende Rücklaufsperrmembran (29) vorgesehen ist.

8. Flüssigkeitsfilter nach Anspruch 7, dadurch gekennzeichnet, daß die Rücklaufsperrmembran (29) flexibel und kreisringförmig ausgebildet ist und an ihrem radial inneren Rand zwischen der Stirnwand (20) und einem an der Befestigungsschraube (3) vorgesehenen Bund (33) gehaltert ist.

9. Flüssigkeitsfilter nach einem der vorangehenden Ansprüche, dadurch gekennzeichnet, daß die Befestigungsschraube (3) zumindest über einen Teil der axialen Länge des Filtergehäuses (2) in dieses hineinragt und auf ihrem Außenumfang Stützglieder (35) für eine Faltenabstützung am Innenumfang eines im Filtergehäuse (2) als Filtereinsatz (5) angeordneten hohlzylindrischen, zickzack-förmig gefalteten Sternfiltereinsatzes aufweist.

10. Flüssigkeitsfilter nach einem der vorangehenden Ansprüche, dadurch gekennzeichnet, daß der Deckel (4) mit einem mit der Befestigungsschraube (3) fluchtenden Stützkörper (6) für eine Faltenabstützung am Innenumfang eines im Filtergehäuse (2) als Filtereinsatz (5) angeordneten hohlzylindrischen, zickzack-förmig gefalteten Sternfiltereinsatzes verbunden oder einstückig ausgeführt ist.

11. Flüssigkeitsfilter nach Anspruch 10, dadurch gekennzeichnet, dadurch gekennzeichnet, daß in dem Stützkörper (6) ein Bypass-Ventil (69) vorgesehen ist, durch welches bei Überschreiten einer vorgebbaren Druckdifferenz zwischen Rohseite und Reinseite des Flüssigkeitsfilters (1) ein unmittelbarer Strömungsweg von der Rohseite zur Reinseite unter Umgehung des Filtereinsatzes (5) freigebbar ist.

12. Flüssigkeitsfilter nach Anspruch 11, dadurch gekennzeichnet, daß im Verlauf des unmittelbaren Strömungsweges von der Rohseite zur Reinseite ein Bypass-Filterelement (44) angeordnet ist.

13. Flüssigkeitsfilter nach einem der vorangehenden Ansprüche, dadurch gekennzeichnet, daß der Deckel (4) und der Filtereinsatz (5) mit miteinander in Eingriff bringbaren Rastverbindungsmitteln (40, 41;55) ausgestattet sind, derart, daß bei einem Abnehmen des Deckels (4) vom Filtergehäuse (2) der Filtereinsatz (5) vom Deckel (4) aus dem Gehäuse (2) heraus mitgenommen wird.

## Revendications

1. Filtre à liquides, en particulier pour l'huile ou le carburant d'un moteur à combustion, dans lequel le filtre à liquides (1) comprend un boîtier de filtre (2) avec au moins chaque fois un canal d'amenée et un canal de retour de liquide (23, 34), un couvercle amovible (4) obturant de façon étanche aux liquides le boîtier de filtre (2) et une cartouche filtrante (5) échangeable séparément et susceptible d'être extraite du boîtier de filtre (2), ce filtre à liquides (1) étant susceptible d'être vissé de façon étanche contre un siège (7) de raccordement de filtre, par exemple d'un moteur à combustion interne, à la place d'un filtre amovible monté par vissage mais échangeable seulement à l'état complet, caractérisé en ce qu'une vis de fixation creuse (3). susceptible de tourner par rapport au boîtier de filtre (2) et formant le canal axial (34) de retour de liquide, est montée en position centrale sur la paroi frontale (20) du boîtier de filtre (2), tournée à l'état monté vers le siège (7) de raccordement de filtre.

2. Filtre à liquides selon la revendication 1, caractérisé en ce que la vis de fixation (3) est retenue de façon imperdable sur la paroi frontale (20) du boîtier de filtre (2).

3. Filtre à liquides selon la revendication 1 ou 2, caractérisé en ce que la vis de fixation (3) comporte, à son extrémité tournée vers le couvercle (4), un multipan (31) intérieur et/ou extérieur, destiné à servir de prolongement pour l'application d'un outil à visser.

4. Filtre à liquides selon l'une des revendications précédentes, caractérisé en ce qu'une rainure annulaire (21) destinée à recevoir une bague d'étanchéité (22) est prévue radialement à l'extérieur sur la surface de la paroi frontale (20) du boîtier de filtre (2) tournée vers le siège (7) de raccordement de filtre, cette bague d'étanchéité (22) faisant saillie, à l'état détendu, hors de la rainure (21) dans la direction axiale du boîtier de filtre (2) et, à l'état monté du filtre à liquides (1), la bague d'étanchéité (22) venant se loger complètement à l'intérieur de la rainure annulaire (21) sous l'effet de la déformation élastique.

5. Filtre à liquides selon l'une des revendications précédentes, caractérisé en ce que l'ouverture de vidange de liquides (25) est constituée par une découpe transversale ou bien un alésage fileté, fermé(e) par une vis amovible (26).

6. Filtre à liquides selon l'une des revendications précédentes, caractérisé en ce que, dans le canal axial de retour de liquides (34) à l'intérieur de la vis de fixation (3), est prévu une valve anti-retour (39).

7. Filtre à liquides selon l'une des revendications précédentes, caractérisé en ce que, sur la paroi frontale (20) du boîtier de filtre (2), du côté du boîtier de filtre, est prévue une membrane anti-retour (29) recouvrant le canal d'amenée (23).

8. Filtre à liquides selon la revendication 7, caractérisé en ce que la membrane anti-retour (29) est réalisée flexible et en forme de bague circulaire et est retenue sur son bord radialement intérieur entre la paroi frontale (20) et une collerette (33) prévue sur la vis de fixation (3).

9. Filtre à liquides selon l'une des revendications précédentes, caractérisé en ce que la vis de fixation (3), au moins sur une partie de la longueur axiale du boîtier de filtre (2), fait saillie intérieurement dans le boîtier de filtre (2) et comporte, sur sa périphérie extérieure, des organes de support (35) destinés à soutenir les plis à la périphérie intérieure d'une cartouche filtrante en étoile, montée dans le boîtier de filtre (2) pour servir de cartouche de filtre (5), cylindrique creuse et pliée en forme de zig-zag.

10. Filtre à liquides selon l'une des revendications précédentes, caractérisé en ce que le couvercle (4) est relié ou bien réalisé monobloc avec un corps d'appui (6), placé dans l'alignement de la vis de fixation (3) et destiné à l'appui des plis à la périphérie intérieure d'une cartouche filtrante en étoile, de forme cylindrique creuse pliée en zig-zag, et qui est montée dans le boîtier de filtre (2) comme cartouche de filtre (5).

11. Filtre à liquides selon la revendication 10, caractérisé en ce que, dans le corps d'appui (6), est prévue une valve de dérivation (69), par l'intermédiaire de laquelle, en cas de dépassement d'une différence de pression susceptible d'être fixée préalablement, entre le côté non filtré et le côté filtré du filtre à liquides (1), est susceptible d'être libéré un trajet d'écoulement direct entre le côté non filtré et le côté filtré, en contournant la cartouche filtrante (5).

12. Filtre à liquides selon la revendication 11, caractérisé en ce que, sur le parcours du trajet d'écoulement direct du côté non filtré au côté filtré, est disposé un élément filtrant de dérivation (44).

13. Filtre à liquides selon l'une des revendications précédentes, caractérisé en ce que le couvercle (4) et la cartouche filtrante (5) sont équipés de moyens de liaison à verrouillage (40, 41; 55) susceptibles d'être engagés les uns dans les autres, de telle façon qu'en cas d'enlèvement du couvercle (4) hors du boîtier de filtre (2), la cartouche filtrante (5) du couvercle (4) soit enlevée du boîtier (2).

## Claims

1. Filter for liquids, in particular for oil or fuel of an internal combustion engine wherein the filter (1) for liquids comprises a filter housing (2) with at least one liquid inlet passage and liquid outlet passage (23, 34), a detachable lid (4) closing the filter housing (2) in a liquid sealing fashion, a filter insert (5) removable out of the filter housing (2), and replaceable as a single unit, wherein the filter (1) instead of a spin-on filter replaceable only in total is to be sealingly screwed onto a filter connection flange (7), e.g. of an internal combustion engine, and wherein central in the filter housing's (2) front wall (20) facing the filter connection flange (7) when mounted a hollow fastening screw bolt (3) is arranged forming the axial liquid outlet passage (34) with the fastening screw bolt rotatable in relation to the filter housing (2),
**characterized in**
that at the circumference of the filter housing (2) or at the circumference of the lid (4) a liquid drain opening (25) for draining the filter housing (2) is provided with the opening (25) closed in operation and to be opened before changing a filter insert.

2. Filter according to claim 1, characterized in that the fastening screw bolt (3) is captively connected in the front wall (20) of the filter housing (2).

3. Filter according to claim 1 or 2, characterized in that the fastening screw bolt (3) at its end facing the lid (4) comprises an inner and/or outer polygon (31) as a dog point for a screwing tool.

4. Filter according to one of the preceeding claims, characterized in that an annular groove (21) is provided radially outside in the surface of the front wall (20) of the filter housing (2) facing the filter connection flange (7) with the groove receiving a sealing ring (22) wherein in the released condition of the sealing ring (22) the latter protrudes out of the groove (21) in axial direction of the filter housing (2), and wherein in the mounted condition of the filter (1) the sealing ring (22) lies completely within the annular groove (21) while being elastically deformed.

5. Filter according to one of the preceeding claims, characterized in that the liquid drain opening (25) is formed by an aperture or threaded bore closed by a detachable screw bolt (26).

6. Filter according to one of the preceeding claims, characterized in that in the axial liquid outlet passage (34) in the fastening screw bolt (3) an outlet check valve (39) is arranged.

7. Filter according to one of the preceeding claims, characterized in that at the front wall (20) of the filter housing (2) at the side of the filter housing an outlet check diaphragm (29) is provided overlapping the inlet passage (23).

8. Filter according to claim 7, characterized in that the outlet check diaphragm (29) is formed flexible and circular and is secured at the radial inner edge thereof between the front wall (20) and a shoulder (33) provided at the fastening screw bolt (3).

9. Filter according to one of the preceeding claims, characterized in that the fastening screw bolt (3) at least along a part of the axial length of the filter housing (2) protrudes into the filter housing (2) and comprises at the outer circumference thereof supporting members (35) for supporting the folds at the inner circumference of a hollow cylindrical zigzag-shaped folded star filter insert arranged in the filter housing (2) and forming the filter insert (5).

10. Filter according to one of the preceeding claims, characterized in that the lid (4) is formed integral or connected with a supporting body (6) aligned with the fastening screw bolt (3) with the supporting body supporting a hollow cylindrical zigzag-shaped folded star filter insert arranged at the inner circumference of the filter housing (2) and forming the filter insert (5).

11. Filter according to claim 10, characterized in that in the supporting body (6) a bypass valve (69) is provided opening a direct flow path from the crude side to the clean side bypassing the filter insert (5) when a selectable pressure difference between the crude side and the clean side of the filter (1) is surpassed.

12. Filter according to claim 11, characterized in that in the course of the direct flow path from the crude side to the clean side a bypass filter element (44) is arranged.

13. Filter according to one of the preceeding claims, characterized in that the lid (4) and filter insert (5) are provided with snap-in means (40, 41; 55) engageable with each other such that when taking off the lid (4) from the filter housing (2) the filter insert (5) is taken out of the housing (2) by means of the lid (4).
